(19) Europäisches Patentamt
European Patent Office
Office européen des brevets

(11) EP 3 082 420 B1

(12) **EUROPEAN PATENT SPECIFICATION**

(45) Date of publication and mention of the grant of the patent:
**28.10.2020 Bulletin 2020/44**

(21) Application number: **14871392.8**

(22) Date of filing: **11.12.2014**

(51) Int Cl.:
***A01N 33/12*** *(2006.01)* ***A01N 57/20*** *(2006.01)*
***A01N 39/04*** *(2006.01)* ***A01P 13/00*** *(2006.01)*

(86) International application number:
**PCT/US2014/069658**

(87) International publication number:
**WO 2015/094883 (25.06.2015 Gazette 2015/25)**

(54) **SYNERGISTIC HERBICIDAL WEED CONTROL AND IMPROVED CROP TOLERANCE FROM COMBINATIONS OF 2,4-D-CHOLINE, GLYPHOSATE, AND GLUFOSINATE IN 2,4-D-, GLYPHOSATE- AND GLUFOSINATE-TOLERANT SOYBEANS, CORN, COTTON AND OTHER CROP AREAS**

SYNERGISTISCHE HERBIZIDE UNKRAUTBEKÄMPFUNG SOWIE VERBESSERTE PFLANZENTOLERANZ AUS KOMBINATIONEN VON 2,4-D-CHOLIN, GLYPHOSAT UND GLYPHOSINAT BEI 2,4-D-, GLYPHOSAT- UND GLYPHOSINATTOLERANTEN SOJABOHNEN, MAIS, BAUMWOLLE UND ANDEREN NUTZPFLANZEN

COMBINAISONS DE 2,4-D-CHOLINE, GLYPHOSATE ET GLUFOSINATE À EFFET HERBICIDE SYNERGIQUE ET TOLÉRANCE AMÉLIORÉE PAR LES CULTURES DANS LES CULTURES DE SOJA, MAIS, COTON ET AUTRES RÉSISTANTES AU 2,4-D, GLYPHOSATE ET GLUFOSINATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2013 US 201361919025 P**
**20.12.2013 US 201361918997 P**

(43) Date of publication of application:
**26.10.2016 Bulletin 2016/43**

(73) Proprietor: **Dow AgroSciences LLC**
**Indianapolis, IN 46268 (US)**

(72) Inventors:
- **MANN, Richard K.**
  **Indianapolis, IN 46268 (US)**
- **MCMASTER, Steve**
  **Indianapolis, IN 46268 (US)**
- **NOLTING, Steven Paul**
  **Indianapolis, IN 46268 (US)**
- **PETERSON, Mark**
  **Indianapolis, IN 46268 (US)**
- **SORRIBAS AMELA, Monica**
  **Indianapolis, IN 46268 (US)**
- **WRIGHT, Terry R.**
  **Indianapolis, IN 46268 (US)**

(74) Representative: **f & e patent**
**Fleischer, Engels & Partner mbB, Patentanwälte**
**Braunsberger Feld 29**
**51429 Bergisch Gladbach (DE)**

(56) References cited:
**EP-A1- 0 585 210** **WO-A2-2012/082542**
**WO-A2-2012/082548**

- **R.M. Merchant: "CONTROL OF GLYPHOSATE-RESISTANT PALMER AMARANTH IN DHT COTTON AND PEANUT RESPONSE TO 2,4-D by RAND MICHAEL MERCHANT (Under the Direction of A", , 1 May 2013 (2013-05-01), pages 1-89, XP055351639, Retrieved from the Internet: URL:https://getd.libs.uga.edu/pdfs/merchant_rand_m_201305_ms.pdf [retrieved on 2017-03-06]**
- **'MERCHANT: Control of glyphosate-resistant Palmer amaranth in DHT cotton and peanut response to 2,4-D.' May 2013, pages 1 - 89, XP055351639 Retrieved from the Internet: <URL:https://getd.libs.uga.edu/pdfs/merchant_rand_m_201305_ms.pdf>**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- ’BAYER: Liberty 280 SL Herbicide.’ April 2013, XP055351643 Retrieved from the Internet: <URL:http://www.agrian.com/pdfs/Liberty_280_SL_Herbicide_Label1l.pdf> [retrieved on 2015-01-26]
- ’DOW AGROSCIENCES: Enlist Duo Herbicide’ MATERIAL SAFETY DATA SHEET. May 2013, XP055351646 Retrieved from the Internet: <URL:http://pdf.tirmsdev.com/Web/20154/900003/20154_900003_MSDS_English_.pdf ?download=true> [retrieved on 2015-02-12]
- Anonymous: "Item record: Control of glyphosate-resistant Palmer amaranth in DHT cotton and peanut response to 2,4-D", , 4 March 2014 (2014-03-04), XP055410406, Retrieved from the Internet: URL:https://athenaeum.libs.uga.edu/handle/10724/28825?show=full [retrieved on 2017-09-27]
- Rand M Merchant ET AL: "WEED SCIENCE Weed Response to 2,4-D, 2,4-DB, and Dicamba Applied Alone or with Glufosinate", The Journal of Cotton Science SC, 1 September 2013 (2013-09-01), pages 212-218, XP055370936, Retrieved from the Internet: URL:https://www.cotton.org/journal/2013-17/3/loader.cfm?csModule=security/getfile&pageid=147460 [retrieved on 2017-05-09]

## Description

This application claims the benefit of U.S. Provisional Patent Application Serial Nos. 61/918,997 and 61/919,025 filed December 20, 2013.

### Background

The protection of crops from weeds and other vegetation which inhibit crop growth is a recurring problem in agriculture. To help combat this problem, a variety of chemicals and chemical formulations effective in the control of such unwanted vegetation have been synthesized and evaluated. Different classes of chemical herbicides have been disclosed in the literature and a large number are in commercial use. However, there remains a need for improved compositions and methods of use thereof that are effective in controlling undesirable vegetation.

Weed control using 2,4-D, 2,4-DB, and dicamba applied alone or with glufosinate has been described by R. M. Merchant et al. (The Journal of Cotton Science 2013, 17, 212-218). WO 2012/082542 A2 and WO 2012/082548 A2 mention the use of compositions comprising, among others, glyphosate, glufosinate, and 2,4-D in soybean plants comprising event SYHT04R and SYHT0H2, respectively. Synergistic herbicidal compositions comprising mixtures of herbicidally acceptable salts of glyphosate and glufosinate are described in EP 0 585 210 A1.

### Summary

Compositions for controlling undesirable vegetation containing a mixture comprising synergistic, herbicidally effective amounts of:

(a) a choline salt of 2,4-dichlorophenoxyacetic acid (2,4-D-choline)

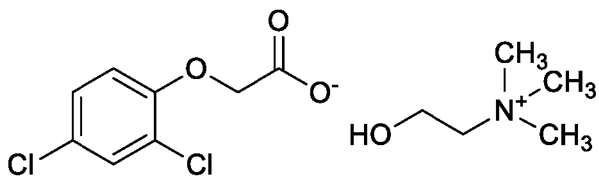
;

(b) a salt of *N*-(phosphonomethyl)glycine (glyphosate)

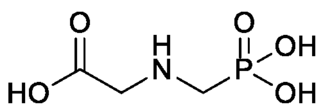
;

and

(c) the ammonium salt of 2-amino-4-(hydroxymethylphosphinyl)butanoic acid (glufosinate)

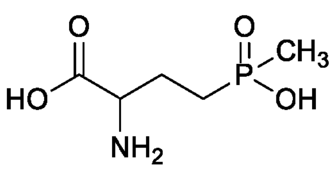

are described herein. The compositions may also contain one or more agriculturally acceptable adjuvants and/or carriers.

The attached claims are directed to methods of controlling undesirable vegetation and improving crop tolerance in 2,4-D-, glyphosate- and glufosinate-tolerant soybeans, corn, or cotton, including contacting undesirable vegetation and 2,4-D-, glyphosate- and glufosinate-tolerant soybeans, corn, or cotton or the locus thereof, including but not limited to, foliage or soil with a composition containing a mixture containing synergistic, herbicidally effective amounts of (a)

2,4-D-choline, (b) a salt of glyphosate and (c) the ammonium salt of glufosinate. The undesirable vegetation may include herbicide resistant or tolerant weeds and the undesirable vegetation may be located in non-crop, perennial crop, fruiting crop, or plantation crop areas.

## Detailed Description

### I. Definitions

As used herein, 2,4-D-choline is the choline salt of 2,4-dichlorophenoxyacetic acid or 2-hydroxy-*N,N,N*-trimethylethanaminium 2-(2,4-dichlorophenoxy)acetate, which has the following structure:

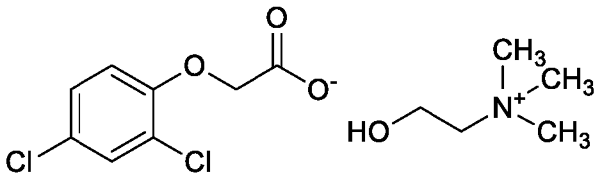

.

Exemplary uses of 2,4-D-choline include controlling annual and perennial broad-leaved weeds, including glyphosate-resistant broad-leaved weeds. 2,4-D-choline can be used in crops that have been made tolerant to 2,4-D, particularly in 2,4-D-tolerant soybeans, corn, and cotton. 2,4-D-choline is generally, but is not required to be, applied post-emergent.

As used herein, glyphosate is *N*-(phosphonomethyl)glycine or 2-((phosphonomethyl)-amino)acetic acid, which has the following structure:

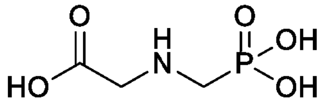

Glyphosate is a non-selective systemic herbicide used to control annual and perennial grasses and broad-leaved weeds, particularly in crops that have been genetically modified to be tolerant of glyphosate. Exemplary chemical forms of glyphosate include, but are not limited to, for example, glyphosate potassium, glyphosate isopropylamine (IPA) salt, glyphosate monoethanolamine (MEA) salt, glyphosate monomethylamine (MMA) salt, and glyphosate dimethylamine (DMA) salt. As used herein, glyphosate salt or salt of glyphosate generally refers to the reaction product of glyphosate with a moiety that can act as a base. Typically, the reaction is an acid-base reaction.

As used herein, glufosinate is 2-amino-4-(hydroxymethylphosphinyl)butanoic acid. Used herein is glufosinate-ammonium, which is also known as the ammonium salt of 2-amino-4-(hydroxymethylphosphinyl)butanoic acid or ammonium (3-amino-3-carboxypropyl)(methyl)phosphinate, and which has the following structure:

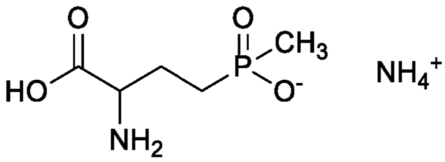

.

Glufosinate-ammonium is registered for controlling a wide variety of broad-leaved weeds and grasses particularly in glufosinate-tolerant crops like canola, corn, soybean, cotton, and sugar beet. As used herein, glufosinate salt or salt of glufosinate generally refers to the reaction product of glufosinate with a moiety that can act as a base. Typically, the reaction is an acid-base reaction.

The term herbicide, as used herein, means an active ingredient that kills, controls or otherwise adversely modifies the growth of plants. As used herein, a herbicidally effective or vegetation controlling amount is an amount of active ingredient that causes a "herbicidal effect," *i.e.,* an adversely modifying effect and includes deviations from natural development, killing, regulation, desiccation, retardation.

As used herein, "plants" and "vegetation" include, but are not limited to, germinant seeds, emerging seedlings, plants emerging from vegetative propagules, and established vegetation.

As used herein, immature vegetation refers to small vegetative plants prior to reproductive stage, and mature vegetation refers to vegetative plants during and after reproductive stage.

As used herein, 2,4-D-tolerant soybeans refer to soybeans that are genetically modified to be tolerant to 2,4-D. Examples of 2,4-D-tolerant soybeans include soybeans containing the *aad-12* gene which confers tolerance to 2,4-D (U.S. Patent 8,283,522 B2). As used herein, 2,4-D-tolerant corn refers to corn that is genetically modified to be tolerant to 2,4-D. Examples of 2,4-D tolerant corn include corn containing the *aad-1* gene which confers tolerance to 2,4-D (U.S. Patent 7,838,733 B2). As used herein, 2,4-D-tolerant cotton refers to cotton that is genetically modified to be tolerant to 2,4-D. Examples of 2,4-D tolerant cotton include cotton containing the *aad-12* gene which confers tolerance to 2,4-D. However, tolerance in each of these crops by the *aad-1* or *aad-12* genes or with alternative genes providing additional or alternative tolerance to transgenic crops [*e.g., aad-13* (U.S. Patent 8,278,505 B2), *tfdA* (U.S. Patent 6,153,401 A), or *24dt02* (CN103060279)] is considered to be included within the scope of the 2,4-D and glufosinate-tolerant soybeans, corn, or cotton described herein.

As used herein, glyphosate tolerance refers to soybeans, corn, or cotton that is genetically modified to be tolerant to glyphosate. Glyphosate tolerance can be provided, for example, by the *CP4* gene (U.S. Patent 5,627,061 A) or *2mEPSPS* (U.S. Patent 6,566,587 B1) as shown herein; however, glyphosate tolerance could also be conferred within the scope of glyphosate-, 2,4-D-, and glufosinate-tolerant-soybeans, corn, or cotton described herein by other genes providing transgenic crop tolerance to glyphosate [*e.g., AroA* and other Class II EPSPS (U.S. Patent 7,893,234 B2); *GLG23* and other Class III EPSPS (U.S. Patent 7,700,842 B2); *GAT* (U.S. Patent 7,405,074 B2), Gox (U.S. Patent 5,463,175 A), or other glyphosate-metabolism gene; or *DGT-28* or other Class IV EPSPS (U.S. Patent Application Publication 20130217577A1)] and are considered to be included within the scope of the 2,4-D-, glyphosate- and glufosinate-tolerant soybeans, corn, or cotton described herein.

As used herein, glufosinate tolerance refers to soybeans, corn, or cotton that is genetically modified to be tolerant to glufosinate. Glufosinate tolerance can be provided, for example, by the *pat* gene (U.S. Patent 5,587,903 A) as shown herein; however, glufosinate tolerance could also be conferred within the scope of the 2,4-D- and glufosinate-tolerant soybeans, corn, or cotton described herein by other genes providing transgenic crop tolerance to glufosinate [*e.g., bar* (U.S. Patent 5,561,236 A) and *dsm2* (PCT International Application WO2008070845)].

## II. Compositions

### A. Synergistic combinations

Described herein are herbicidal compositions containing a mixture containing synergistic, herbicidally effective amounts of:

(a) the choline salt of 2,4-dichlorophenoxyacetic acid (2,4-D-choline),

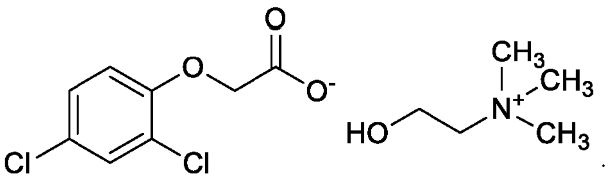

(b) a salt of *N*-(phosphonomethyl)glycine (glyphosate),

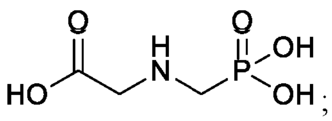

and

(c) the ammonium salt of 2-amino-4-(hydroxymethylphosphinyl)butanoic acid (glufosinate),

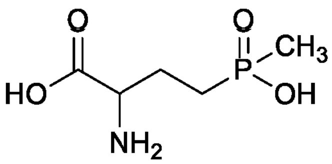

Agriculturally acceptable salts of glyphosate are anticipated to control undesirable vegetation in combination with 2,4-D-choline and the ammonium salt of glufosinate. Examples of such agriculturally acceptable salts of glyphosate include, but are not limited to, glyphosate potassium, glyphosate isopropylamine (IPA) salt, glyphosate monoethanolamine (MEA) salt, glyphosate monomethylamine (MMA) salt, and glyphosate dimethylamine (DMA) salt.

The agriculturally acceptable ammonium salt of glufosinate is anticipated to control undesirable vegetation in combination with 2,4-D-choline and a salt of glyphosate.

The combination of 2,4-D-choline, a salt of glyphosate, and the ammonium salt of glufosinate exhibits synergism, *e.g.*, the herbicidal active ingredients are more effective in combination than when applied individually. Synergism has been defined as "an interaction of two or more factors such that the effect when combined is greater than the predicted effect based on the response of each factor applied separately." Shaner, D. L., Ed. Herbicide Handbook, 10th ed. Lawrence: Weed Science Society of America, 2014. In certain embodiments, the compositions exhibit synergy as determined by the Colby equation (Colby, S. R. Calculation of the synergistic and antagonistic response of herbicide combinations. Weeds 1967, 15, 20-22).

Additionally, in some embodiments, the combination of 2,4-D-choline, a salt of glyphosate and the ammonium salt of glufosinate improves crop tolerance in 2,4-D-, glyphosate- and glufosinate-tolerant soybeans, corn and cotton.

Herbicidal activity is exhibited by the compounds when they are applied pre- and post-emergence directly to the plant or to the locus of the plant at any stage of growth. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, the amount of chemical applied, and the combinations thereof. These and other factors can be adjusted to promote non-selective or selective herbicidal action. In some embodiments, the compositions described herein are applied as a post-emergence application, to relatively immature and mature undesirable vegetation to achieve the maximum control of weeds.

In some embodiments, 2,4-D-choline, a salt of glyphosate, and the ammonium salt of glufosinate are used in combination with herbicides that are selective for the soybeans, corn or cotton being treated and which complement the spectrum of weeds controlled by these compounds at the application rate employed. In some embodiments, the compositions described herein and other complementary herbicides are applied at the same time, either as a combination formulation or as a tank mix, at the same time or as sequential applications.

The compositions can be applied to weeds or their locus thereof, including but not limited to, foliage or soil. by the use of conventional ground or aerial dusters, sprayers, and granule applicators, and by other conventional means known to those skilled in the art.

In some embodiments, the concentration of the active ingredients in the compositions described herein is from about 0.0005 to 98 percent by weight. In some embodiments, the concentration is from about 0.0006 to 90 percent by weight. In compositions designed to be employed as concentrates, the active ingredients, in certain embodiments, are present in a concentration from about 0.1 to 98 weight percent, and in certain embodiments about 0.5 to 90 weight percent. Such compositions are, in certain embodiments, diluted with an inert carrier, such as water, before application. The diluted compositions usually applied to weeds or the locus of weeds contain, in certain embodiments, about 0.005 to 99 weight percent active ingredient and in certain embodiments contain about 0.01 to 25.0 weight percent.

In the compositions and methods described herein, 2,4-D-choline plus a salt of glyphosate is used in combination with the ammonium salt of glufosinate. With regard to the compositions, in some embodiments, the weight ratio of 2,4-D-choline plus a salt of glyphosate to the ammonium salt of glufosinate is within the range from about 1:100 to about 100:1, from about 1:90 to about 90:1, from about 1:80 to about 80:1, from about 1:70 to about 70:1, from about 1:60 to about 60:1, from about 1:50 to about 50:1, from about 1:40 to about 40:1, from about 1:30 to about 30:1, from about 1:25 to about 25:1, from about 1:20 to about 20:1, from about 1:18 to about 18:1, from about 1:15 to about 15:1, from about 1:13 to about 13:1, from about 1:12 to about 12:1, from about 1:11 to about 11:1, from about 1:10 to about 10:1, from about 1:9 to about 9:1, from about 1:8 to about 8:1, from about 1:7 to about 7:1, from about 1:6 to about 6:1, from about 1:5 to about 5:1, from about 1:4 to about 4:1, from about 1:3 to about 3:1, from about 1:2 to about 2:1, from about 1.75:1 to about 7:1, from about 1.5:1 to about 8:1, from about 1.25:1 to about 9:1 and from about 2:1 to about 6:1. In certain embodiments, the weight ratio of 2,4-D-choline plus a salt of glyphosate to the ammonium salt of glufosinate is within the range from about 2:1 to about 8:1, from about 2.5:1 to about 6:1 and from about 2.75:1 to about 5:1. In other embodiments, the weight ratio of 2,4-D-choline plus a salt of glyphosate to the ammonium salt of glufosinate is within the range from about 3:1 to about 4:1.

In certain embodiments of the compositions and methods described herein, the combination of herbicidally active ingredients consists of (a) 2,4-D-choline, (b) a salt of glyphosate, and (c) the ammonium salt of glufosinate and the three components are used in amounts such that the weight ratio of (a) to (b) to (c) is from about 1-10 of (a) to about 1-10 of (b) to about 1-5 of (c). In additional embodiments, the weight ratios of the three components include from about 1-5 of (a) to about 1-5 of (b) to about 1-5 of (c); from about 1-5 of (a) to about 1-5 of (b) to about 1-2 of (c); from about 2-5 of (a) to about 2-5 of (b) to about 1-2 of (c); from about 1-5 of (a) to about 1-5 of (b) to about 1 of (c); from about 1-4

of (a) to about 1-4 of (b) to about 1 of (c); from about 1-3 of (a) to about 1-3 of (b) to about 1 of (c); and from about 1-2 of (a) to about 1-2 of (b) to about 1 of (c). Stated another way, the weight ratio of (a):(b):(c) can be from about 0.5:0.5:1 to about 10:10:1. Further examples of weight ratios of (a):(b):(c) include from about 0.5:0.5:1 to about 5:5:1; from about 0.6:0.6:1 to about 5:5:1; from about 0.7:0.7:1 to about 5:5:1; from about 0.7:0.7:1 to about 4:4:1; from about 0.8:0.8:1 to about 4:4:1; from about 0.9:0.9:1 to about 4:4:1; from about 1:1:1 to about 4:4:1; from about 1:1:1 to about 3:3:1; from about 0.5:0.5:1 to about 7:7:1; from about 1.25:1.25:1 to about 4:4:1; from about 1.6:1.6:1 to about 2:2:1; from about 1:1:1 to about 2:2:1; about 1:1:1; about 2:2:1; about 2.5:2.5:1; about 3:3:1; about 3.5:3.5:1; about 4:4:1; about 4.5:4.5:1; about 5:5:1; about 5.5:5.5:1; about 6:6:1; about 7:7:1; about 8:8:1; about 9:9:1; and about 10:10:1.

The methods comprise contacting the undesirable vegetation with a composition described herein. In some embodiments, the composition is applied at an application rate from about 500 grams acid equivalent per hectare (g ae/ha) to about 12,200 g ae/ha based on the total amount of active ingredients in the composition. In certain embodiments, the composition is applied at an application rate from about 760 g ae/ha to about 8,220 g ae/ha based on the total amount of active ingredients in the composition. In certain embodiments, the composition is applied at an application rate from about 840 g ae/ha to about 6,000 g ae/ha based on the total amount of active ingredients in the composition. In certain embodiments, the composition is applied at an application rate from about 2,182 g ae/ha to about 5,454 g ae/ha based on the total amount of active ingredients in the composition.

The components of the mixtures described herein can be tank-mixed or applied as part of a multipart herbicidal system. In some embodiments, all three components may be formulated together (e.g., in the same formulation) or separately (e.g., in separate formulations) and applied simultaneously. Alternatively, two of the three components can be formulated together (e.g., glyphosate and 2,4-D) and the third component formulated separately and the two formulations applied simultaneously.

In one embodiment, the compositions exhibit synergy against a variety of weed types. In one embodiment, the combination of 2,4-D-choline plus a salt of glyphosate to the ammonium salt of glufosinate in a ratio of about 1:1 to about 4:1 exhibits greater than about 5, 6, 7, 8, 9, 10, 11, 13, 15, 18, 20, 21, 22, 23, 24, 25, 30 or 35% control compared to the Colby predicted value at 7-28 days after application (DAA).

In another embodiment, the compositions exhibit synergy in reducing crop injury. In one embodiment, the combination of 2,4-D-choline plus a salt of glyphosate to the ammonium salt of glufosinate in a ratio of about 1:1 to about 4:1 exhibits reductions of about 5, 6, 7, 8, 9, 10, 11, 13, 15, 18, 20, 21, 22, 23, 24, 25, 30, 35, 40, 45 or 48% crop injury compared to the Colby predicted value at 1-16 days after application (DAA).

In another embodiment, the compositions exhibit synergy as defined by the efficacy values defined above against a variety of weed types or crops, including but not limited to, *Amaranthus palmeri* (Palmer pigweed, AMAPA), *Ambrosia trifida* L. (giant ragweed, AMBTR), *Conyza canadensis* (horseweed, ERICA), and *Salsola tragus* L. (Russian thistle, SASKR).

In another embodiment, the compositions can be used to control glyphosate-tolerant soybeans (GLXMA) and other crops that have single site tolerance to, including but not limited to, glyphosate, acetolactate synthase (ALS) and other herbicide modes-of-action.

### B. Other actives

The mixtures described herein can be applied in conjunction with one or more other herbicides to control a wider variety of undesirable vegetation. When used in conjunction with other herbicides, the composition can be formulated with the other herbicide or herbicides, tank-mixed with the other herbicide or herbicides or applied sequentially with the other herbicide or herbicides. Some of the herbicides that can be employed in conjunction with the compositions and methods described herein include, but are not limited to acid, salt and ester forms of the following herbicides: 4-CPA, 4-CPB, 4-CPP, 3,4-DA, 2,4-DB, 3,4-DB, 3,4-DP, 2,3,6-TBA, 2,4,5-T, 2,4,5-TB, acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron-methyl, bensulide, bentazon, benthiocarb, benzadox, benzfendizone, benzipram, benzobicyclon, benzofenap, benzofluor, benzoylprop, benzthiazuron, bicyclopyrone, bifenox, bilanafos, bispyribac-sodium, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole, chlorprocarb, carfentrazone (e.g., carfentrazone-ethyl), CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon (e.g., cinidon-ethyl), cinmethylin, cinosulfuron, cisanilide, clethodim, cliodinate, clodinafop-propargyl, clofop, clomazone, clomeprop, cloprop, cloproxydim, clopyralid, cloransulam-methyl, CMA, copper sulfate, CPMF, CPPC, credazine, cresol, cumyluron,

cyanatryn, cyanazine, cycloate, cyclopyrimorate, cyclosulfamuron, cycloxydim, cycluron, cyhalofop (e.g., cyhalofop-butyl), cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diclofop-methyl, diclosulam, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethbenzamide, ethalfluralin, ethametsulfuron, ethidimuron, ethiolate, ethobenzamid, etobenzamid, ethofumesate, ethoxyfen, ethoxysulfuron, etinofen, etnipromid, etobenzanid, EXD, fenasulam, fenoprop, fenoxaprop (e.g., fenoxaprop-P-ethyl), fenoxaprop-P-ethyl + isoxadifen-ethyl, fenoxasulfone, fenquinotrione, fenteracol, fenthiaprop, fentrazamide, fenuron, ferrous sulfate, flamprop, flamprop-M, flazasulfuron, florasulam, fluazifop (e.g., fluazifop-P-butyl), fluazolate, flucarbazone, flucetosulfuron, fluchloralin, flufenacet, flufenican, flufenpyr (e.g., flufenpyr-ethyl), flumetsulam, flumezin, flumiclorac (e.g., flumiclorac-pentyl), flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, fumiclorac, furyloxyfen, halauxifen, halosafen, halosulfuron (e.g., halosulfuron-methyl), haloxydine, haloxyfop-methyl, haloxyfop-P (e.g., haloxyfop-P-methyl), hexachloroacetone, hexaflurate, hexazinone, imazamethabenz, imazamox, imazapic, imazapyr, imazaquin, imazosulfuron, indanofan, indaziflam, iodobonil, iodomethane, iodosulfuron, iodosulfuron-ethyl-sodium, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA esters and amines, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metosulam, metoxuron, metribuzin, metsulfuron, metsulfuron-methyl, molinate, monalide, monisouron, monochloroacetic acid, monolinuron, monuron, morfamquat, MSMA, naproanilide, napropamide, napropamide-M, naptalam, neburon, nicosulfuron, nipyraclofen, nitralin, nitrofen, nitrofluorfen, norflurazon, noruron, OCH, orbencarb, *ortho*-dichlorobenzene, orthosulfamuron, oryzalin, oxadiargyl, oxadiazon, oxapyrazon, oxasulfuron, oxaziclomefone, oxyfluorfen, paraflufen-ethyl, parafluron, paraquat, pebulate, pelargonic acid, pendimethalin, penoxsulam, pentachlorophenol, pentanochlor, pentoxazone, perfluidone, pethoxamid, phenisopham, phenmedipham (e.g., phenmedipham-ethyl), phenobenzuron, phenylmercury acetate, picloram, picolinafen, pinoxaden, piperophos, potassium arsenite, potassium azide, potassium cyanate, pretilachlor, primisulfuron (e.g., primisulfuron-methyl), procyazine, prodiamine, profluazol, profluralin, profoxydim, proglinazine, prohexadione-calcium, prometon, prometryn, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen (e.g., pyraflufen-ethyl), pyrasulfotole, pyrazogyl, pyrazolynate, pyrazosulfuron-ethyl, pyrazoxyfen, pyribenzoxim, pyributicarb, pyriclor, pyridafol, pyridate, pyriftalid, pyriminobac, pyrimisulfan, pyrithiobac-sodium, pyroxasulfone, pyroxsulam, quinclorac, quinmerac, quinoclamine, quinonamid, quizalofop, quizalofop-P-ethyl, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosate, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thifensulfuron-methyl, thiobencarb, tiafenacil, tiocarbazil, tioclorim, topramezone, tralkoxydim, triafamone, tri-allate, triasulfuron, triaziflam, tribenuron (e.g., tribenuron-methyl), tricamba, triclopyr (e.g., triclopyr choline salt), triclopyr esters and salts, tridiphane, trietazine, trifloxysulfuron, trifluralin, triflusulfuron, trifop, trifopsime, trihydroxytriazine, trimeturon, tripropindan, tritac tritosulfuron, vernolate, xylachlor, benzyl 4-amino-3-chloro-5-fluoro-6-(4-chloro-2-fluoro-3-methoxyphenyl)pyridine-2-carboxylate and salts, choline salts, esters, optically active isomers and mixtures thereof.

**C. Safeners**

In some embodiments, the compositions described herein are employed in combination with one or more herbicide safeners, such as AD-67 (MON 4660), benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, harpin proteins, isoxadifen-ethyl, jiecaowan, jiecaoxi, mefenpyr-diethyl, mephenate, naphthalic anhydride (NA), oxabetrinil, R29148 and *N*-phenyl-sulfonylbenzoic acid amides, to enhance their selectivity. In some embodiments, the safeners are employed in rice, cereal, corn, or maize settings. In some embodiments, the safener is cloquintocet or an ester or salt thereof. In certain embodiments, cloquintocet is utilized to antagonize harmful effects of the compositions on rice and cereals. In some embodiments, the safener is cloquintocet (mexyl).

**D. Adjuvants/Carriers**

In some embodiments, compositions provided herein further comprise at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water-dispersible granules, microcapsules or wettable powders, or liquids, such as, for example, emulsifiable concentrates, solutions, emulsions or suspensions. They can also be provided as a pre-mix or tank mixed.

Suitable agricultural adjuvants and carriers include, but are not limited to, crop oil concentrate; nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, *n*-butyl oleate, isopropyl myristate, propylene glycol dioleate, di-octyl succinate, di-butyl adipate, di-octyl phthalate and the like; esters of mono, di and polycarboxylic acids and the like. Specific organic solvents include, but are not limited to toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, *N*-methyl-2-pyrrolidinone, *N,N*-dimethyl alkylamides, dimethyl sulfoxide, liquid fertilizers and the like. In certain embodiments, water is the carrier for the dilution of concentrates.

Suitable solid carriers include but are not limited to talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, cellulose, and the like.

In some embodiments, the compositions described herein further comprise one or more surface-active agents. In some embodiments, such surface-active agents are employed in both solid and liquid compositions, and in certain embodiments those designed to be diluted with carrier before application. The surface-active agents can be anionic, cationic or nonionic in character and can be employed as emulsifying agents, wetting agents, suspending agents, or for other purposes. Surfactants which may also be used in the present formulations are described, *inter alia,* in McCutcheon's Detergents and Emulsifiers Annual, MC Publishing Corporation: Ridgewood, NJ, 1998 and in Encyclopedia of Surfactants, Vol. I-III, Chemical Publishing Company: New York, 1980-81. Surface-active agents include, but are not limited to salts of alkyl sulfates, such as diethanolammonium lauryl sulfate; alkylarylsulfonate salts, such as calcium dodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, and in certain embodiments, methyl esters.

In some embodiments, these materials, such as vegetable or seed oils and their esters, can be used interchangeably as an agricultural adjuvant, as a liquid carrier or as a surface active agent.

Other exemplary additives for use in the compositions provided herein include but are not limited to compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

### III. Methods of use

The claimed methods of controlling undesirable vegetation in 2,4-D-, glyphosate- and glufosinate-tolerant soybeans, corn, or cotton, comprise contacting the vegetation or the locus thereof, including but not limited to foliage, soil or water, with a composition containing a mixture containing synergistic herbicidally effective amounts of (a) 2,4-D-choline, (b) a salt of glyphosate, and (c) the ammonium salt of glufosinate. In certain embodiments, the methods employ the compositions described herein.

Agriculturally acceptable salts of glyphosate are anticipated to control undesirable vegetation in combination with 2,4-D-choline and a salt of glufosinate. Examples of such agriculturally acceptable salts of glyphosate include, but are not limited to, glyphosate potassium, glyphosate isopropylamine (IPA) salt, glyphosate monoethanolamine (MEA) salt, glyphosate monomethylamine (MMA) salt, and glyphosate dimethylamine (DMA) salt.

The agriculturally acceptable ammonium salt of glufosinate is anticipated to control undesirable vegetation in combination with 2,4-D-choline and a salt of glyphosate.

The compositions and methods provided herein are utilized to control undesirable vegetation. Undesirable vegetation includes undesirable vegetation that occurs in 2,4-D-, glyphosate- and glufosinate-tolerant soybeans, corn, or cotton.

In certain embodiments, the undesirable vegetation is *Alopecurus myosuroides* Huds. (blackgrass, ALOMY), *Amaranthus palmeri* S. Wats. (Palmer amaranth, AMAPA), *Avena fatua* L. (wild oat, AVEFA), *Brachiaria brizantha* (Hochst. ex A. Rich.) Stapf. or *Urochloa brizantha* (Hochst. ex A. Rich.) R.D. (beard grass, BRABR), *Brachiariaplatyphylla* (Groseb.) Nash or *Urochloa platyphylla (Nash)* R.D. Webster (broadleaf signalgrass, BRAPP), *Brachiariaplantaginea* (Link) Hitchc. or *Urochloaplantaginea* (Link) R.D. Webster (alexandergrass, BRAPL), *Cenchrus echinatus* L. (southern sandbur, CENEC), *Digitaria horizontalis* Willd. (Jamaican crabgrass, DIGHO), *Digitaria insularis* (L.) Mez ex Ekman (sourgrass, TRCIN), *Digitaria sanguinalis* (L.) Scop. (large crabgrass, DIGSA), *Echinochloa crus-galli* (L.) P. Beauv. (barnyardgrass, ECHCG), *Echinochloa colonum* (L.) Link (junglerice, ECHCO), *Eleusine indica* (L.) Gaertn. (goosegrass, ELEIN), *Lolium multiflorum* Lam. (Italian ryegrass, LOLMU), *Panicum dichotomiflorum* Michx. (fall panicum, PANDI), *Panicum miliaceum* L. (wild-proso millet, PANMI), *Sesbania exaltata* (Raf.) Cory/Rydb. Ex Hill (hemp sesbania, SEBEX), *Setaria faberi* Herrm. (giant foxtail, SETFA), *Setaria viridis* (L.) Beauv. (green foxtail, SETVI), *Sorghum halepense* (L.) Pers. (Johnsongrass, SORHA), *Sorghum bicolor* (L.) Moench ssp. *Arundinaceum* (shattercane, SORVU), *Cyperus esculentus* L. (yellow nutsedge, CYPES), *Cyperus rotundus* L. (purple nutsedge, CYPRO), *Abutilon theophrasti* Medik. (velvetleaf, ABUTH), *Amaranthus* species (pigweeds and amaranths, AMASS), *Ambrosia artemisiifolia* L. (common ragweed, AMBEL), *Ambrosia psilostachya* DC. (western ragweed, AMBPS), *Ambrosia trifida* L. (giant ragweed, AMBTR), *Anoda cristata* (L.) Schlecht. (spurred anoda, ANVCR), *Asclepias syriaca* L. (common milkweed, ASCSY), *Bidenspilosa* L. (hairy beggarticks, BIDPI), *Borreria* species (BOISS), *Borreria alata* (Aubl.) DC., *Spermacoce alata* Aubl. or *Spermacoce latifolia* (broadleaf buttonweed, BOILF), *Chenopodium album* L. (common lambsquarters, CHEAL), *Cirsium arvense* (L.) Scop. (Canada thistle, CIRAR), *Commelina benghalensis* L. (tropical spiderwort, COMBE), *Datura stramonium* L. (jimsonweed, DATST), *Daucus carota* L. (wild carrot, DAUCA), *Euphorbia heterophylla* L. (wild poinsettia, EPHHL), *Euphorbia hirta* L. or *Chamaesyce hirta* (L.) Millsp. (garden spurge, EPHHI), *Euphorbia dentata* Michx. (toothed spurge, EPHDE), *Erigeron bonariensis* L. or *Conyza bonariensis* (L.) Cronq. (hairy fleabane, ERIBO), *Erigeron canadensis* L. or *Conyza canadensis* (L.) Cronq. (horseweed, ERICA), *Conyza sumatrensis* (Retz.) E. H. Walker (tall fleabane, ERIFL), *Helianthus annuus* L. (common sunflower, HELAN), *Jacquemontia tamnifolia* (L.) Griseb. (smallflower morningglory, IAQTA), *Ipomoea hederacea* (L.) Jacq. (ivyleaf morningglory, IPOHE), *Ipomoea lacunosa* L. (white morningglory, IPOLA), *Lactuca serriola* L./Torn. (prickly lettuce, LACSE), *Portulaca oleracea* L. (common purslane, POROL), *Richardia* species (pusley, RCHSS), *Salsola tragus* L. (Russian thistle, SASKR), *Sida* species (sida, SIDSS), *Sida spinosa* L. (prickly sida, SIDSP), *Sinapis arvensis* L. (wild mustard, SINAR), *Solanum ptychanthum* Dunal (eastern black nightshade, SOLPT), *Tridax procumbens* L. (coat buttons, TRQPR), or *Xanthium strumarium* L. (common cocklebur, XANST).

In certain embodiments, the undesirable vegetation is *Amaranthus palmeri* S. Wats. (Palmer amaranth, AMAPA), *Ambrosia artemisiifolia* L. (common ragweed, AMBEL), *Ambrosia trifida* L. (giant ragweed, AMBTR), *Cassia obtusifolia* (sickle pod, CASOB), *Centaurea maculosa* auct. non Lam. (spotted knapweed, CENMA), *Cirsium arvense* (L.) Scop. (Canada thistle, CIRAR), *Convolvulus arvensis* L. (field bindweed, CONAR), *Conyza canadensis* (L.) Cronq. (horseweed, ERICA), *Euphorbia esula* L. (leafy spurge, EPHES), *Lactuca serriola* L./Torn. (prickly lettuce, LACSE), *Plantago lanceolata* L. (buckhorn plantain, PLALA), *Rumex obtusifolius* L. (broadleaf dock, RUMOB), *Salsola tragus* L. (Russian thistle, SASKR), *Sesbania exaltata* (Raf.) Cory/Rydb. Ex Hill (hemp sesbania, SEBEX), *Sida spinosa* L. (prickly sida, SIDSP), *Sinapis arvensis* L. (wild mustard, SINAR), *Sonchus arvensis* L. (perennial sowthistle, SONAR), *Solidago* species (goldenrod, SOOSS), *Taraxacum officinale* G.H. Weber ex Wiggers (dandelion, TAROF), *Trifolium repens* L. (white clover, TRFRE), or *Urtica dioica* L. (common nettle, URTDI).

In some embodiments, the combination 2,4-D-choline plus a salt of glyphosate and the ammonium salt of glufosinate are used to synergistically control *Amaranthus palmeri* S. Wats. (Palmer amaranth, AMAPA), *Ambrosia trifida* L. (giant ragweed, AMBTR), *Conyza canadensis* (L.) Cronq. (horseweed, ERICA) and *Salsola tragus* L. (Russian thistle,

SASKR).

2,4-D-choline, a salt of glyphosate, and the ammonium salt of glufosinate may be used to control herbicide resistant or tolerant weeds. The methods employing the combination of 2,4-D-choline, a salt of glyphosate, and the ammonium salt of glufosinate and the compositions described herein may also be employed to control herbicide resistant or tolerant weeds. Exemplary resistant or tolerant weeds include, but are not limited to, biotypes resistant or tolerant to acetolactate synthase (ALS) or acetohydroxy acid synthase (AHAS) inhibitors (e.g., imidazolinones, sulfonylureas, pyrimidinylthiobenzoates, dimethoxy-pyrimidines, triazolopyrimidine sulfonamides, sulfonylaminocarbonyltriazolinones), photosystem II inhibitors (e.g., phenylcarbamates, pyridazinones, triazines, triazinones, uracils, amides, ureas, benzothiadiazinones, nitriles, phenylpyridazines), acetyl CoA carboxylase (ACCase) inhibitors (e.g., aryloxyphenoxypropionates, cyclohexanediones, phenylpyrazolines), synthetic auxins (e.g., benzoic acids, phenoxycarboxylic acids, pyridine carboxylic acids, quinoline carboxylic acids), auxin transport inhibitors (e.g., phthalamates, semicarbazones), photosystem I inhibitors (e.g., bipyridyliums), 5-enolpyruvylshikimate-3-phosphate (EPSP) synthase inhibitors (e.g., glyphosate), glutamine synthetase inhibitors (*e.g.*, glufosinate, bialafos), microtubule assembly inhibitors (e.g., benzamides, benzoic acids, dinitroanilines, phosphoramidates, pyridines), mitosis inhibitors (e.g., carbamates), very long chain fatty acid (VLCFA) inhibitors (*e.g.*, acetamides, chloroacetamides, oxyacetamides, tetrazolinones), fatty acid and lipid synthesis inhibitors (e.g., phosphorodithioates, thiocarbamates, benzofuranes, chlorocarbonic acids), protoporphyrinogen oxidase (PPO) inhibitors (e.g., diphenylethers, *N*-phenylphthalimides, oxadiazoles, oxazolidinediones, phenylpyrazoles, pyrimidinediones, thiadiazoles, triazolinones), carotenoid biosynthesis inhibitors (e.g., clomazone, amitrole, aclonifen), phytoene desaturase (PDS) inhibitors (e.g., amides, anilidex, furanones, phenoxybutan-amides, pyridiazinones, pyridines), 4-hydroxyphenyl-pyruvate-dioxygenase (HPPD) inhibitors (e.g., callistemones, isoxazoles, pyrazoles, triketones), cellulose biosynthesis inhibitors (e.g., nitriles, benzamides, quinclorac, triazolocarboxamides), herbicides with multiple modes-of-action such as quinclorac, and unclassified herbicides such as arylaminopropionic acids, difenzoquat, endothall, and organoarsenicals. Exemplary resistant or tolerant weeds include, but are not limited to, biotypes with resistance or tolerance to single or multiple herbicides, biotypes with resistance or tolerance to single or multiple chemical classes, biotypes with resistance or tolerance to single or multiple herbicide modes-of-action, and biotypes with single or multiple resistance or tolerance mechanisms (*e.g.*, target site resistance or metabolic resistance).

The compositions and methods described herein are used to control undesirable vegetation in glyphosate-, 2,4-D- and glufosinate-tolerant soybeans, corn, or cotton which may also be combined with traits providing dicamba-tolerance (*e.g., DMO*), pyridyloxy auxin-tolerance (*e.g., aad-12, aad-13*), auxin-tolerance, auxin transport inhibitor-tolerance, acetyl CoA carboxylase (ACCase) inhibitor-herbicide tolerance [*e.g.*, aryloxyphenoxypropionate, cyclohexanedione, and phenylpyrazoline chemistries (*e.g.*,various *ACCase* genes and *aad-1* gene)], acetolactate synthase (ALS)-inhibiting herbicide tolerance (*e.g.*, imidazolinone, sulfonylurea, triazolopyrimidine sulfonamide, pyrmidinylthiobenzoate, and other chemistries = *AHAS, Csr1, SurA*), 4-hydroxyphenyl-pyruvate dioxygenase (HPPD) inhibitor-tolerance, phytoene desaturase (PDS) inhibitor-tolerance (*e.g., pds, CYP1A1, CYP2B6, CYP2C19*), carotenoid biosynthesis inhibitor-tolerance, protoporphyrinogen oxidase (PPO) inhibitor-tolerance, cellulose biosynthesis inhibitor-tolerance (*e.g., ixr2-1, CYP1A1*), mitosis inhibitor-tolerance, microtubule inhibitor-tolerance, very long chain fatty acid (VLCFA) inhibitor-tolerance (*e.g., CYP1A1, CYP2B6, CYP2C19),* fatty acid and lipid biosynthesis inhibitor-tolerance (*e.g., CYP1A1*), photosystem I inhibitor-tolerance (*e.g.,* SOD), photosystem II inhibitor (triazine, nitrile, and phenylurea chemistries) tolerance (*e.g., psbA, CYP1A1, CYP2B6, CYP2C19,* and *Bxn*), in crops (such as, but not limited to, soybean, corn, cotton, canola/oilseed rape, rice, cereals, sorghum, sunflower, sugar beet, sugarcane, and turf), for example, in conjunction with glyphosate, 5-enolpyruvylshikimate-3-phosphate (EPSP) synthase inhibitors, glutamine synthase inhibitors, dicamba, phenoxy auxins, pyridyloxy auxins, synthetic auxins, auxin transport inhibitors, aryloxyphenoxypropionates, cyclohexanediones, phenylpyrazolines, ACCase inhibitors, imidazolinones, sulfonylureas, pyrimidinylthiobenzoates, dimethoxypyrimidines, triazolopyrimidine sulfonamides, sulfonylaminocarbonyltriazolinones, ALS or acetohydroxy acid synthase (AHAS) inhibitors, HPPD inhibitors, PDS inhibitors, carotenoid biosynthesis inhibitors, PPO inhibitors, cellulose biosynthesis inhibitors, mitosis inhibitors, microtubule inhibitors, very long chain fatty acid inhibitors, fatty acid and lipid biosynthesis inhibitors, photosystem I inhibitors, photosystem II inhibitors, triazines, and bromoxynil. The compositions and methods may be used in controlling undesirable vegetation in soybeans, corn, or cotton possessing single and multiple or stacked traits conferring tolerance to single or multiple chemistries and/or inhibitors of multiple modes-of-action.

## Examples

### Example 1. Evaluation of Herbicidal Activity of Mixtures under Field Conditions

#### Methodology

Field trials were conducted under agricultural field conditions in multiple states in the United States, including but not limited to Arkansas, Iowa, Illinois, Indiana, Kansas, Minnesota, Mississippi, Missouri, New York, Tennessee and

Wisconsin. Trials were established as RCB (randomized complete block) design, with 3-4 replicates per treatment, and plot sizes varying from 5-10 feet (ft) wide by 12-30 ft long. Treatments were applied with small plot backpack sprayers, using pressurized carbon dioxide ($CO_2$) as propellant. Pressure varied from 17-52 pounds per square inch (psi), with spray tips typically of a Flat Fan type applying water diluent at 15 gallons per acre (GPA). Boom sizes varied from 5-11 ft in width. Treatments were applied to soybean, cotton, corn or fallow crop land. Weed sizes varied, but all treatments were applied as post-emergence treatments to weeds from 2 leaf to 2 tiller growth stages varying from 3 to 17 inches in height. The weed spectrum included, but was not limited to, *Amaranthus palmeri* S. Wats. (Palmer amaranth, AMAPA), *Ambrosia trifida* L. (giant ragweed, *AMBTR*), *Conyza canadensis* (L.) Cronq. (horseweed, ERICA) and *Salsola tragus* L. (Russian thistle, SASKR).

Glyphosate-, 2,4-D- and glufosinate-tolerant soybeans, corn or cotton comprising genes for tolerance for each herbicide as described above were used in all trials either as a breeding stack of one to three herbicide-tolerant events or as a molecular stack where all three herbicide tolerance traits were transformed into a single event.

Evaluation

Commercially available product of glufosinate-ammonium (Ignite® 280SL (Soluble Concentrate)), containing 256 grams acid equivalent per liter (g ae/L)) was utilized in all trials, either applied alone or tank-mixed with ammonium sulfate liquid (2.5% volume per volume (vol/vol)). The 2,4-D-choline salt plus glyphosate premix formulation was a 400 g ae/L SL containing 195 g ae/L 2,4-D-choline salt and 205 g ae/L glyphosate-dimethylammonium (DMA) salt. If ammonium sulfate was mixed with glufosinate-ammonium, then ammonium sulfate was also mixed with the 2,4-D-choline salt + glyphosate-dimethylammonium plus glufosinate mixture. All treatments were mixed in water at appropriate formulated product rates to achieve the desired rates as shown based on a unit area of application (hectare). Treatments were rated at 1 to 28 days after application (DAA) as compared to the untreated control plants. The trial sites had naturally occurring populations of weeds. The treated plots and control plots were rated blind at various intervals after application. Ratings were based on a Percent (%) Visual basis, where 0 corresponds to no visual effect as seen as exemplified by weed control or crop injury and 100 corresponds to complete kill of the target weeds or complete crop injury.

Data were collected for all trials and analyzed using various statistical methods.

Colby's equation was used to determine the herbicidal effects expected from the mixtures (Colby, S. R. Calculation of the synergistic and antagonistic response of herbicide combinations. Weeds 1967, 15, 20-22). A t-test (alpha=0.05) between Colby predictions and observed combinations was used to test for significant differences indicating synergy or antagonism using replicate data. The results presented in the Tables were significant according to the described criteria.

The following equation was used to calculate the expected activity of mixtures containing three active ingredients, A. B, and C:

$$\text{Expected} = A + B + C - (AB + AC + BC)/100 + (ABC)/10{,}000$$

A = observed efficacy of active ingredient A at the same concentration as used in the mixture;
B = observed efficacy of active ingredient B at the same concentration as used in the mixture;
C = observed efficacy of active ingredient C at the same concentration as used in the mixture.

However, the experiments described herein were performed such that active ingredients A and B were combined and only the efficacy of the combination was determined. As such, Colby's equation simplifies to

$$\text{Expected}=Z + C - (ZC/100)$$

Z = observed efficacy of a combination of active ingredient A (2,4-D-choline) and active ingredient B (glyphosate-DMA) at the same concentration as used in the mixture;
C = observed efficacy of active ingredient C (glufosinate-ammonium) at the same concentration as used in the mixture.

The results are summarized in Tables 1-7.

Table 1. Synergistic Herbicidal Weed Control (%Visual Control) from Combinations of 2,4-D-Choline + Glyphosate-Dimethylammonium (DMA) plus Glufosinate-Ammonium in Multiple Field Trials at 7 to 28 Days After Application (DAA).

| | | 2,4-D-Choline + Glyphosate-DMA | | Glufosinate-Ammonium | | Combination | |
|---|---|---|---|---|---|---|---|
| Weed Bayer Code | Evaluation Interval | g ae/ha | Mean % Weed Control | g ae/ha | Mean % Weed Control | Measured Mean % Weed Control | Colby Predicted Mean % Weed Control |
| AMAPA | 7DAA | 2185 | 50.0 | 542 | 67.5 | 88.5 | 83.8 |
| AMAPA | 8DAA | 1640 | 40.0 | 542 | 32.5 | 67.5 | 59.5 |
| AMBTR | 8DAA | 2185 | 36.7 | 542 | 56.7 | 80.0 | 72.3 |
| AMAPA | 11DAA | 1640 | 50.0 | 542 | 33.8 | 88.8 | 66.6 |
| AMAPA | 11DAA | 2185 | 60.0 | 542 | 33.8 | 84.3 | 73.5 |
| AMAPA | 13DAA | 1640 | 43.8 | 542 | 31.3 | 72.5 | 61.2 |
| AMAPA | 14DAA | 2185 | 67.5 | 542 | 10.0 | 85.0 | 70.8 |
| ERICA | 14DAA | 2185 | 30.0 | 542 | 76.8 | 92.5 | 83.7 |
| AMAPA | 16DAA | 2185 | 51.7 | 542 | 36.7 | 81.7 | 69.2 |
| AMAPA | 21DAA | 2185 | 41.3 | 542 | 38.8 | 81.3 | 63.9 |
| AMBTR | 21DAA | 1640 | 77.3 | 542 | 36.7 | 99.0 | 86.0 |
| SASKR | 21DAA | 1640 | 66.3 | 542 | 13.8 | 83 | 71.3 |
| AMAPA | 23DAA | 2185 | 41.7 | 542 | 21.7 | 76.7 | 54.4 |
| SASKR | 28DAA | 1640 | 67.5 | 542 | 15 | 85 | 73.5 |

Table 2. Improved AAD12 Soybean (GLXMA) Crop Tolerance Results (%Visual Chlorosis) from Combinations of 2,4-D-Choline + Glyphosate-DMA plus Glufosinate-Ammonium in Multiple Field Trials at 1 to 6DAA.

| | | 2,4-D-Choline + Glyphosate-DMA | | Glufosinate-Ammonium | | Combination | |
|---|---|---|---|---|---|---|---|
| Crop Bayer Code | Evaluation Interval | g ae/ha | M ean % Visual Chlorosis | g ae/ha | Mean % Visual Chlorosis | Measured Mean % Visual Chlorosis | Colby Predicted Mean % Visual Chlorosis |
| GLXMA | 1DAA | 2185 | 3.8 | 542 | 12.5 | 5.0 | 15.8 |
| GLXMA | 1DAA | 4370 | 3.8 | 822 | 16.3 | 12.5 | 19.4 |
| GLXMA | 1DAA | 4370 | 3.8 | 1084 | 20.0 | 11.3 | 23.0 |
| GLXMA | 2DAA | 4370 | 5.0 | 822 | 9.5 | 8.3 | 14.0 |
| GLXMA | 2DAA | 4370 | 5.8 | 822 | 12.3 | 8.8 | 17.2 |
| GLXMA | 2DAA | 4370 | 5.0 | 822 | 12.3 | 8.8 | 16.6 |
| GLXMA | 2DAA | 4370 | 0.0 | 822 | 11.3 | 5.0 | 11.3 |
| GLXMA | 2DAA | 4370 | 0.0 | 822 | 8.3 | 4.0 | 8.3 |
| GLXMA | 2DAA | 4370 | 1.5 | 822 | 7.5 | 3.8 | 8.9 |
| GLXMA | 2DAA | 4370 | 2.3 | 822 | 7.3 | 4.0 | 9.3 |
| GLXMA | 2DAA | 4370 | 0.0 | 822 | 13.8 | 1.3 | 13.8 |
| GLXMA | 2DAA | 4370 | 5.0 | 1084 | 13.0 | 8.8 | 17.4 |

(continued)

| | | 2,4-D-Choline + Glyphosate-DMA | | Glufosinate-Ammonium | | Combination | |
|---|---|---|---|---|---|---|---|
| Crop Bayer Code | Evaluation Interval | g ae/ha | M ean % Visual Chlorosis | g ae/ha | Mean % Visual Chlorosis | Measured Mean % Visual Chlorosis | Colby Predicted Mean % Visual Chlorosis |
| GLXMA | 2DAA | 4370 | 5.8 | 1084 | 15.5 | 10.0 | 20.3 |
| GLXMA | 2DAA | 4370 | 0.0 | 1084 | 11.3 | 5.3 | 11.3 |
| GLXMA | 2DAA | 4370 | 0.0 | 1084 | 11.8 | 3.0 | 11.8 |
| GLXMA | 2DAA | 4370 | 1.5 | 1084 | 8.5 | 4.8 | 9.9 |
| GLXMA | 2DAA | 4370 | 2.3 | 1084 | 8.5 | 4.5 | 10.5 |
| GLXMA | 2DAA | 4370 | 1.8 | 1084 | 7.8 | 5.8 | 9.4 |
| GLXMA | 2DAA | 4370 | 1.5 | 1084 | 7.5 | 5.0 | 8.9 |
| GLXMA | 3DAA | 4370 | 0.0 | 822 | 6.0 | 2.3 | 6.0 |
| GLXMA | 3DAA | 4370 | 0.8 | 822 | 7.5 | 2.8 | 8.2 |
| GLXMA | 3DAA | 4370 | 0.0 | 822 | 7.3 | 2.3 | 7.3 |
| GLXMA | 3DAA | 4370 | 0.0 | 822 | 5.5 | 1.5 | 5.5 |
| GLXMA | 3DAA | 4370 | 0.0 | 822 | 6.8 | 2.8 | 6.8 |
| GLXMA | 3DAA | 4370 | 0.0 | 822 | 13.0 | 0.0 | 13.0 |
| GLXMA | 3DAA | 4370 | 1.3 | 822 | 9.0 | 5.8 | 10.2 |
| GLXMA | 3DAA | 4370 | 0.0 | 822 | 17.5 | 6.8 | 17.5 |
| GLXMA | 3DAA | 4370 | 2.3 | 822 | 10.8 | 4.3 | 12.9 |
| GLXMA | 3DAA | 4370 | 0.0 | 1084 | 8.5 | 2.3 | 8.5 |
| GLXMA | 3DAA | 4370 | 0.8 | 1084 | 10.0 | 3.0 | 10.7 |
| GLXMA | 3DAA | 4370 | 0.0 | 1084 | 11.3 | 4.0 | 11.3 |
| GLXMA | 3DAA | 4370 | 0.0 | 1084 | 10.5 | 3.8 | 10.5 |
| GLXMA | 3DAA | 4370 | 2.5 | 1084 | 16.3 | 11.3 | 18.3 |
| GLXMA | 3DAA | 4370 | 1.3 | 1084 | 16.3 | 10.0 | 17.3 |
| GLXMA | 3DAA | 4370 | 0.0 | 1084 | 13.0 | 1.3 | 13.0 |
| GLXMA | 3DAA | 4370 | 0.0 | 1084 | 11.7 | 0.0 | 11.7 |
| GLXMA | 3DAA | 4370 | 0.0 | 1084 | 16.7 | 1.7 | 16.7 |
| GLXMA | 3DAA | 4370 | 0.0 | 1084 | 7.5 | 2.8 | 7.5 |
| GLXMA | 3DAA | 4370 | 0.0 | 1084 | 20.0 | 12.5 | 20.0 |
| GLXMA | 3DAA | 4370 | 2.3 | 1084 | 18.8 | 8.0 | 20.6 |
| GLXMA | 4DAA | 2185 | 0.0 | 542 | 3.8 | 0.5 | 3.8 |
| GLXMA | 4DAA | 2185 | 1.0 | 542 | 2.8 | 1.8 | 3.7 |
| GLXMA | 4DAA | 2185 | 1.0 | 542 | 2.8 | 1.8 | 3.7 |
| GLXMA | 4DAA | 2185 | 0.0 | 542 | 6.3 | 0.0 | 6.3 |
| GLXMA | 4DAA | 4370 | 0.0 | 822 | 6.5 | 0.0 | 6.5 |
| GLXMA | 4DAA | 4370 | 0.0 | 822 | 6.3 | 0.0 | 6.3 |

(continued)

| | | 2,4-D-Choline + Glyphosate-DMA | | Glufosinate-Ammonium | | Combination | |
|---|---|---|---|---|---|---|---|
| Crop Bayer Code | Evaluation Interval | g ae/ha | M ean % Visual Chlorosis | g ae/ha | Mean % Visual Chlorosis | Measured Mean % Visual Chlorosis | Colby Predicted Mean % Visual Chlorosis |
| GLXMA | 4DAA | 4370 | 0.5 | 822 | 6.0 | 4.5 | 6.5 |
| GLXMA | 4DAA | 4370 | 0.0 | 822 | 6.3 | 0.0 | 6.3 |
| GLXMA | 4DAA | 4370 | 0.0 | 822 | 50.0 | 1.7 | 50.0 |
| GLXMA | 4DAA | 4370 | 0.0 | 822 | 20.5 | 6.3 | 20.5 |
| GLXMA | 4DAA | 4370 | 0.0 | 1084 | 10.3 | 0.0 | 10.3 |
| GLXMA | 4DAA | 4370 | 0.0 | 1084 | 9.0 | 0.0 | 9.0 |
| GLXMA | 4DAA | 4370 | 0.5 | 1084 | 7.5 | 3.5 | 8.0 |
| GLXMA | 4DAA | 4370 | 0.0 | 1084 | 11.3 | 0.0 | 11.3 |
| GLXMA | 4DAA | 4370 | 0.0 | 1084 | 50.0 | 6.7 | 50.0 |
| GLXMA | 4DAA | 4370 | 0.0 | 1084 | 12.5 | 8.5 | 12.5 |
| GLXMA | 4DAA | 4370 | 0.0 | 1084 | 29.5 | 8.8 | 29.5 |
| GLXMA | 4DAA | 4370 | 0.0 | 1084 | 30.0 | 8.8 | 30.0 |
| GLXMA | 5DAA | 2185 | 0.0 | 542 | 4.0 | 0.0 | 4.0 |
| GLXMA | 5DAA | 4370 | 2.3 | 1084 | 7.8 | 0.0 | 9.8 |
| GLXMA | 5DAA | 4370 | 2.3 | 1084 | 7.8 | 0.0 | 9.8 |
| GLXMA | 6DAA | 4370 | 15.0 | 823 | 33.3 | 8.3 | 43.2 |

Table 3. Improved AAD12 Soybean (GLXMA) Crop Tolerance Results (%Visual Chlorosis) from Combinations of 2,4-D-Choline + Glyphosate-DMA plus Glufosinate-Ammonium in Multiple Field Trials at 7 to 9DAA.

| | | 2,4-D-Choline + Glyphosate-DMA | | Glufosinate-Ammonium | | Combination | |
|---|---|---|---|---|---|---|---|
| Crop Bayer Code | Evaluation Interval | g ae/ha | Mean % Visual Chlorosis | g ae/ha | Mean % Visual Chlorosis | Measured Mean % Visual Chlorosis | Colby Predicted Mean % Visual Chlorosis |
| GLXMA | 7DAA | 2185 | 0.0 | 542 | 3.3 | 1.5 | 3.3 |
| GLXMA | 7DAA | 4370 | 0.0 | 822 | 3.5 | 0.8 | 3.5 |
| GLXMA | 7DAA | 4370 | 0.5 | 822 | 5.0 | 2.0 | 5.5 |
| GLXMA | 7DAA | 4370 | 0.0 | 822 | 7.5 | 1.3 | 7.5 |
| GLXMA | 7DAA | 4370 | 5.0 | 822 | 8.5 | 7.0 | 13.1 |
| GLXMA | 7DAA | 4370 | 0.0 | 822 | 10.0 | 1.3 | 10.0 |
| GLXMA | 7DAA | 4370 | 21.3 | 822 | 0.0 | 15.0 | 21.3 |
| GLXMA | 7DAA | 4370 | 0.0 | 822 | 8.3 | 5.8 | 8.3 |
| GLXMA | 7DAA | 4370 | 0.0 | 822 | 11.3 | 3.8 | 11.3 |
| GLXMA | 7DAA | 4370 | 0.0 | 1084 | 6.3 | 1.3 | 6.3 |

(continued)

| | | 2,4-D-Choline + Glyphosate-DMA | | Glufosinate-Ammonium | | Combination | |
|---|---|---|---|---|---|---|---|
| Crop Bayer Code | Evaluation Interval | g ae/ha | Mean % Visual Chlorosis | g ae/ha | Mean % Visual Chlorosis | Measured Mean % Visual Chlorosis | Colby Predicted Mean % Visual Chlorosis |
| GLXMA | 7DAA | 4370 | 0.5 | 1084 | 8.0 | 2.8 | 8.5 |
| GLXMA | 7DAA | 4370 | 0.0 | 1084 | 11.3 | 1.3 | 11.3 |
| GLXMA | 7DAA | 4370 | 1.3 | 1084 | 8.5 | 5.8 | 9.7 |
| GLXMA | 7DAA | 4370 | 5.0 | 1084 | 12.3 | 7.5 | 16.6 |
| GLXMA | 7DAA | 4370 | 0.0 | 1084 | 11.0 | 8.5 | 11.0 |
| GLXMA | 7DAA | 4370 | 4.0 | 1084 | 7.0 | 4.0 | 10.7 |
| GLXMA | 7DAA | 4370 | 0.0 | 1084 | 3.0 | 0.0 | 3.0 |
| GLXMA | 7DAA | 4370 | 0.0 | 1084 | 12.5 | 7.5 | 12.5 |
| GLXMA | 8DAA | 2185 | 0.0 | 542 | 2.8 | 0.5 | 2.8 |
| GLXMA | 8DAA | 4370 | 1.0 | 822 | 3.8 | 0.8 | 4.7 |
| GLXMA | 8DAA | 4370 | 0.8 | 822 | 4.8 | 1.3 | 5.5 |
| GLXMA | 8DAA | 4370 | 0.3 | 822 | 7.7 | 1.7 | 8.0 |
| GLXMA | 8DAA | 4370 | 1.0 | 822 | 5.5 | 4.5 | 6.5 |
| GLXMA | 8DAA | 4370 | 0.0 | 822 | 17.5 | 8.0 | 17.5 |
| GLXMA | 8DAA | 4370 | 0.0 | 822 | 5.0 | 0.5 | 5.0 |
| GLXMA | 8DAA | 4370 | 0.8 | 1084 | 7.0 | 1.5 | 7.7 |
| GLXMA | 8DAA | 4370 | 1.0 | 1084 | 8.0 | 1.8 | 8.9 |
| GLXMA | 8DAA | 4370 | 0.8 | 1084 | 8.8 | 2.3 | 9.4 |
| GLXMA | 8DAA | 4370 | 0.3 | 1084 | 8.3 | 3.7 | 8.6 |
| GLXMA | 8DAA | 4370 | 1.0 | 1084 | 7.3 | 3.5 | 8.2 |
| GLXMA | 8DAA | 4370 | 0.0 | 1084 | 8.8 | 3.0 | 8.8 |
| GLXMA | 8DAA | 4370 | 0.0 | 1084 | 6.0 | 0.3 | 6.0 |
| GLXMA | 8DAA | 4370 | 0.0 | 1084 | 5.8 | 0.3 | 5.8 |
| GLXMA | 8DAA | 4370 | 0.0 | 1084 | 16.3 | 11.3 | 16.3 |
| GLXMA | 8DAA | 4370 | 0.0 | 1084 | 7.3 | 0.5 | 7.3 |
| GLXMA | 8DAA | 4370 | 0.0 | 1084 | 6.3 | 0.5 | 6.3 |
| GLXMA | 9DAA | 4370 | 0.0 | 822 | 5.5 | 0.0 | 5.5 |
| GLXMA | 9DAA | 4370 | 0.0 | 1084 | 6.0 | 0.0 | 6.0 |

Table 4. Improved AAD12 Soybean (GLXMA) Crop Tolerance Results (%Visual Chlorosis) from Combinations of 2,4-D-Choline + Glyphosate-DMA plus Glufosinate-Ammonium in Multiple Field Trials at 10 to 14DAA.

| | | 2,4-D-Choline + Glyphosate-DMA salt | | Glufosinate-ammonium | | Combination | |
|---|---|---|---|---|---|---|---|
| Crop Bayer Code | Evaluation Interval | g ae/ha | Mean % Visual Chlorosis | g ae/ha | Mean % Visual Chlorosis | Measured Mean % Visual Chlorosis | Colby Predicted Mean % Visual Chlorosis |
| GLXMA | 10DAA | 4370 | 0.0 | 822 | 3.0 | 0.5 | 3.0 |
| GLXMA | 10DAA | 4370 | 0.0 | 822 | 6.8 | 0.0 | 6.8 |
| GLXMA | 10DAA | 4370 | 0.8 | 822 | 13.0 | 0.8 | 13.7 |
| GLXMA | 10DAA | 4370 | 0.0 | 822 | 2.5 | 0.5 | 2.5 |
| GLXMA | 10DAA | 4370 | 0.0 | 1084 | 8.5 | 1.3 | 8.5 |
| GLXMA | 10DAA | 4370 | 0.8 | 1084 | 10.0 | 0.8 | 10.7 |
| GLXMA | 13DAA | 4370 | 0.0 | 823 | 10.7 | 0.0 | 10.7 |
| GLXMA | 13DAA | 4370 | 0.0 | 1084 | 8.5 | 3.8 | 8.5 |
| GLXMA | 14DAA | 2185 | 8.3 | 542 | 5.8 | 7.8 | 13.5 |
| GLXMA | 14DAA | 2185 | 0.3 | 542 | 12.5 | 6.8 | 12.7 |
| GLXMA | 14DAA | 4370 | 0.0 | 822 | 8.5 | 0.0 | 8.5 |
| GLXMA | 14DAA | 4370 | 0.0 | 822 | 6.3 | 1.3 | 6.3 |
| GLXMA | 14DAA | 4370 | 3.8 | 822 | 2.0 | 3.0 | 5.7 |
| GLXMA | 14DAA | 4370 | 0.0 | 822 | 15.0 | 5.0 | 15.0 |
| GLXMA | 14DAA | 4370 | 11.3 | 1084 | 8.3 | 12.5 | 18.6 |
| GLXMA | 14DAA | 4370 | 0.0 | 1084 | 11.3 | 0.0 | 11.3 |
| GLXMA | 14DAA | 4370 | 0.0 | 1084 | 7.8 | 0.0 | 7.8 |
| GLXMA | 14DAA | 4370 | 0.0 | 1084 | 10.0 | 7.0 | 10.0 |
| GLXMA | 14DAA | 4370 | 0.0 | 1084 | 4.0 | 0.0 | 4.0 |
| GLXMA | 14DAA | 4370 | 3.8 | 1084 | 2.8 | 3.3 | 6.4 |
| GLXMA | 14DAA | 4370 | 3.3 | 1084 | 2.3 | 3.3 | 5.4 |
| GLXMA | 14DAA | 4370 | 0.0 | 1084 | 16.3 | 5.0 | 16.3 |

Table 5. Improved AAD12 Soybean (GLXMA) Crop Tolerance Results (%Visual Chlorosis) from Combinations of 2,4-D-Choline + Glyphosate-DMA plus Glufosinate-Ammonium in Multiple Field Trials at 15 to 21DAA.

| | | 2,4-D-Choline + Glyphosate-DMA | | Glufosinate-Ammonium | | Combination | |
|---|---|---|---|---|---|---|---|
| Crop Bayer Code | Evaluation Interval | g ae/ha | Mean % Visual Chlorosis | g ae/ha | Mean % visual Chlorosis | Measured Mean % Visual Chlorosis | Colby Predicted Mean % Visual Chlorosis |
| GLXMA | 15DAA | 2185 | 0.5 | 542 | 4.5 | 0.5 | 5.0 |
| GLXMA | 15DAA | 4370 | 0.8 | 822 | 2.3 | 0.5 | 3.0 |
| GLXMA | 15DAA | 4370 | 0.0 | 822 | 5.0 | 0.5 | 5.0 |
| GLXMA | 15DAA | 4370 | 0.8 | 1084 | 5.5 | 1.0 | 6.2 |

(continued)

| | | 2,4-D-Choline + Glyphosate-DMA | | Glufosinate-Ammonium | | Combination | |
|---|---|---|---|---|---|---|---|
| Crop Bayer Code | Evaluation Interval | g ae/ha | Mean % Visual Chlorosis | g ae/ha | Mean % visual Chlorosis | Measured Mean % Visual Chlorosis | Colby Predicted Mean % Visual Chlorosis |
| GLXMA | 15DAA | 4370 | 0.0 | 1084 | 8.5 | 0.0 | 8.5 |
| GLXMA | 15DAA | 4370 | 0.8 | 1084 | 2.3 | 0.5 | 3.0 |
| GLXMA | 16DAA | 2185 | 0.0 | 542 | 3.0 | 0.0 | 3.0 |
| GLXMA | 16DAA | 4370 | 0.0 | 822 | 4.0 | 0.0 | 4.0 |
| GLXMA | 16DAA | 4370 | 0.0 | 1084 | 5.0 | 1.3 | 5.0 |
| GLXMA | 16DAA | 4370 | 0.0 | 1084 | 5.5 | 0.5 | 5.5 |
| GLXMA | 21DAA | 2185 | 0.0 | 542 | 4.0 | 0.8 | 4.0 |
| GLXMA | 21DAA | 4370 | 0.0 | 822 | 5.0 | 0.0 | 5.0 |
| GLXMA | 21DAA | 4370 | 0.0 | 1084 | 6.0 | 0.8 | 6.0 |

Table 6. Improved AAD12 Soybean (GLXMA) Crop Tolerance Results (%Visual Necrosis) from Combinations of 2,4-D-Choline + Glyphosate-DMA plus Glufosinate-Ammonium in Multiple Field Trials at 2 to 7DAA.

| | | 2,4-D-Choline + Glyphosate-DMA | | Glufosinate-Ammonium | | Combination | |
|---|---|---|---|---|---|---|---|
| Crop Bayer Code | Evaluation Interval | g ae/ha | Mean % Visual Necrosis | g ae/ha | Mean % Visual Necrosis | Measured Mean % Visual Necrosis | Colby Predicted Mean % Visual Necrosis |
| GLXMA | 2DAA | 4370 | 21.3 | 822 | 21.3 | 23.8 | 37.9 |
| GLXMA | 2DAA | 4370 | 21.3 | 1084 | 25.0 | 27.5 | 41.0 |
| GLXMA | 3DAA | 2185 | 2.3 | 542 | 0.0 | 1.0 | 2.3 |
| GLXMA | 3DAA | 4370 | 8.5 | 822 | 0.8 | 5.0 | 9.2 |
| GLXMA | 3DAA | 4370 | 10.8 | 1084 | 3.0 | 11.5 | 13.4 |
| GLXMA | 3DAA | 4370 | 11.0 | 1084 | 8.5 | 15.0 | 18.6 |
| GLXMA | 3DAA | 4370 | 8.5 | 1084 | 1.5 | 6.3 | 9.9 |
| GLXMA | 3DAA | 4370 | 7.5 | 1084 | 1.3 | 5.5 | 8.7 |
| GLXMA | 5DAA | 2185 | 5.0 | 542 | 2.8 | 5.5 | 7.6 |
| GLXMA | 7DAA | 2185 | 2.3 | 542 | 0.5 | 0.5 | 2.7 |
| GLXMA | 7DAA | 2185 | 1.5 | 542 | 0.3 | 0.3 | 1.8 |
| GLXMA | 7DAA | 4370 | 6.3 | 822 | 0.8 | 3.3 | 7.0 |
| GLXMA | 7DAA | 4370 | 21.3 | 822 | 0.0 | 15.0 | 21.3 |
| GLXMA | 7DAA | 4370 | 0.0 | 822 | 10.0 | 1.3 | 10.0 |
| GLXMA | 7DAA | 4370 | 6.5 | 822 | 1.0 | 3.3 | 7.4 |
| GLXMA | 7DAA | 4370 | 5.5 | 822 | 1.3 | 3.3 | 6.7 |
| GLXMA | 7DAA | 4370 | 10.0 | 1084 | 3.3 | 10.0 | 12.9 |

(continued)

| | | 2,4-D-Choline + Glyphosate-DMA | | Glufosinate-Ammonium | | Combination | |
|---|---|---|---|---|---|---|---|
| Crop Bayer Code | Evaluation Interval | g ae/ha | Mean % Visual Necrosis | g ae/ha | Mean % Visual Necrosis | Measured Mean % Visual Necrosis | Colby Predicted Mean % Visual Necrosis |
| GLXMA | 7DAA | 4370 | 6.3 | 1084 | 1.3 | 4.0 | 7.4 |
| GLXMA | 7DAA | 4370 | 20.0 | 1084 | 1.3 | 12.8 | 21.0 |
| GLXMA | 7DAA | 4370 | 17.5 | 1084 | 10.0 | 17.5 | 25.8 |
| GLXMA | 7DAA | 4370 | 17.5 | 1084 | 10.0 | 17.5 | 25.8 |
| GLXMA | 7DAA | 4370 | 6.5 | 1084 | 2.0 | 4.3 | 8.4 |
| GLXMA | 7DAA | 4370 | 5.5 | 1084 | 2.3 | 4.3 | 7.6 |

Table 7. Improved AAD12 Soybean (GLXMA) Crop Tolerance Results (%Visual Necrosis) from Combinations of 2,4-D-Choline + Glyphosate-DMA plus Glufosinate-Ammonium in Multiple Field Trials at 8 to 16DAA.

| | | 2,4-D-Choline + Glyphosate-DMA | | Glufosinate-Ammonium | | Combination | |
|---|---|---|---|---|---|---|---|
| Crop Bayer Code | Evaluation Interval | g ae/ha | Mean % Visual Necrosis | g ae/ha | Mean % Visual Necrosis | Measured Mean % Visual Necrosis | Colby Predicted Mean % Visual Necrosis |
| GLXMA | 8DAA | 4370 | 18.8 | 822 | 7.5 | 18.8 | 24.8 |
| GLXMA | 8DAA | 4370 | 10.0 | 1084 | 10.0 | 15.0 | 19.0 |
| GLXMA | 8DAA | 4370 | 17.5 | 1084 | 12.5 | 17.5 | 27.8 |
| GLXMA | 8DAA | 4370 | 18.8 | 1084 | 12.5 | 17.5 | 28.9 |
| GLXMA | 8DAA | 4370 | 21.8 | 1084 | 6.5 | 23.0 | 26.8 |
| GLXMA | 8DAA | 4370 | 19.5 | 1084 | 6.5 | 20.0 | 24.7 |
| GLXMA | 9DAA | 4370 | 8.5 | 822 | 6.0 | 8.5 | 14.0 |
| GLXMA | 10DAA | 4370 | 4.5 | 1084 | 2.3 | 5.3 | 6.7 |
| GLXMA | 14DAA | 4370 | 2.3 | 822 | 0.0 | 1.3 | 2.3 |
| GLXMA | 14DAA | 4370 | 2.5 | 822 | 1.0 | 1.8 | 3.5 |
| GLXMA | 14DAA | 4370 | 5.0 | 1084 | 5.0 | 5.0 | 9.8 |
| GLXMA | 14DAA | 4370 | 2.5 | 1084 | 2.0 | 2.5 | 4.5 |
| GLXMA | 16DAA | 2185 | 3.0 | 542 | 3.0 | 4.0 | 5.9 |
| GLXMA | 16DAA | 4370 | 6.5 | 822 | 5.0 | 6.0 | 11.2 |
| GLXMA | 16DAA | 4370 | 7.5 | 1084 | 1.8 | 7.8 | 9.1 |

The following abbreviations are used in the tables above:

2,4-D-choline = choline salt of 2,4-dichlorophenoxyacetic acid or 2-hydroxy-*N,N,N*-trimethylethanaminium 2-(2,4-dichlorophenoxy)acetate
glyphosate-DMA = glyphosate-dimethylammonium, dimethylamine salt of *N*-(phosphonomethyl)glycine or dimethylammonium hydrogen(((carboxymethyl)amino)methy)-phosphonate

glufosinate-ammonium = ammonium salt of 2-amino-4-(hydroxymethylphosphinyl)butanoic acid or ammonium (3-amino-3-carboxypropyl)(methyl)phosphinate
AMAPA = *Amaranthus palmeri* S. Wats. (Palmer amaranth)
AMBTR = *Ambrosia trifida* L. (giant ragweed)
ERICA = *Conyza canadensis* (L.) Cronq. (horseweed)
GLXMA = *Glycine max* L. (soybean)
SASKR = *Salsola tragus* L. (Russian thistle)
g ae/ha = grams acid equivalent per hectare
DAA = Days After Application

The term "comprising" and variations thereof as used herein is used synonymously with the term "including" and variations thereof and are open, non-limiting terms. Although the terms "comprising" and "including" have been used herein to describe various embodiments, the terms "consisting essentially of" and "consisting of" can be used in place of "comprising" and "including" to provide for more specific embodiments of the invention and are also disclosed.

## Claims

1. A method of controlling undesirable vegetation and improving crop tolerance in 2,4-D-, glyphosate- and glufosinate-tolerant soybeans, corn, or cotton, comprising contacting undesirable vegetation and 2,4-D-, glyphosate- and glufosinate-tolerant soybeans, corn, or cotton or the locus thereof, or foliage or soil, with a composition comprising a mixture comprising a synergistic, herbicidally effective amount of:

    (a) the choline salt of 2,4-dichlorophenoxyacetic acid (2,4-D-choline)

    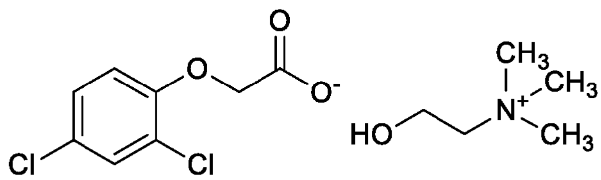
    ;

    (b) a salt of *N*-(phosphonomethyl)glycine (glyphosate)

    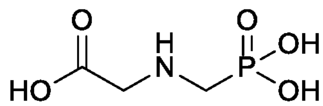
    ;

    and
    (c) the ammonium salt of 2-amino-4-(hydroxymethylphosphinyl)butanoic acid (glufosinate ammonium)

    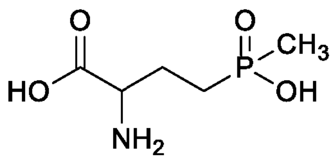
    .

2. The method of claim 1, wherein the 2,4-D-choline, the salt of glyphosate and the glufosinate ammonium are applied pre-emergence or post-emergence to the undesirable vegetation or locus thereof, or foliage or soil, in the 2,4-D-, glyphosate- and glufosinate-tolerant soybeans, corn, or cotton.

3. The method of claim 1, wherein the undesirable vegetation is contacted prior to planting a crop.

4. The method of claim 1, wherein the salt of glyphosate is selected from the group consisting of potassium salt, isopropylammonium (IPA) salt, monoethanolammonium (MEA) salt, monomethylammonium (MMA) salt, and dimethylammonium (DMA) salt, and combinations thereof and preferably is the dimethylammonium (DMA) salt.

5. The method of any of claims 1-4, wherein the weight ratio of (a) + (b) to (c) is from about 1.5:1 to about 8:1.

6. The method of any of claims 1-4, wherein the weight ratio of (a) to (b) to (c) is from about 1 - 4 of (a) to about 1 - 4 of (b) to about 1 of (c) or from about 1:1:1 to about 4:4:1.

7. The method of any of claims 1-6, wherein the 2,4-D-, glyphosate- and glufosinate-tolerant soybeans, corn, or cotton possess single or multiple or stacked traits conferring tolerance to single or multiple herbicides or inhibitors of single or multiple modes-of-action.

8. A method of any of claims 1-7, wherein improving crop tolerance comprises reducing injury in the 2,4-D- and glufosinate-tolerant soybeans, corn, or cotton.

9. The method of any of claims 1-8 wherein synergy is determined by the Colby equation.

10. The method of any of claims 1-9, wherein the undesirable vegetation comprises a herbicide resistant or tolerant weed.

11. The method of claim 10, wherein the resistant or tolerant weed is a biotype with resistance or tolerance to single or multiple herbicides or single or multiple chemical classes, or inhibitors of single or multiple herbicide modes-of-action.

12. The method of claim 10 or claim 11, wherein the resistant or tolerant weed is a biotype resistant or tolerant to acetolactate synthase (ALS) or acetohydroxy acid synthase (AHAS) inhibitors, photosystem II inhibitors, acetyl CoA carboxylase (ACCase) inhibitors, photosystem I inhibitors, 5-enolpyruvyl-shikimate-3-phosphate (EPSP) synthase inhibitors, microtubule assembly inhibitors, lipid synthesis inhibitors, protoporphyrinogen oxidase (PPO) inhibitors, carotenoid biosynthesis inhibitors, very long chain fatty acid (VLCFA) inhibitors, phytoene desaturase (PDS) inhibitors, glutamine synthetase inhibitors, 4-hydroxyphenyl-pyruvate-dioxygenase (HPPD) inhibitors, mitosis inhibitors, cellulose biosynthesis inhibitors, herbicides with multiple modes-of-action, quinclorac, arylaminopropionic acids, difenzoquat, endothall or organoarsenicals.

13. The method of any of claims 1-12, further comprising contacting the undesirable vegetation and the 2,4-D-, glyphosate- and glufosinate-tolerant soybeans, corn and cotton or the locus thereof, or water or soil, with a herbicidally effective amount of an additional herbicide and/or contacting the undesirable vegetation and the 2,4-D-, glyphosate- and glufosinate-tolerant soybeans, corn and cotton or the locus thereof with a herbicide safener

## Patentansprüche

1. Ein Verfahren zur Bekämpfung unerwünschter Vegetation und Verbesserung der Nutzpflanzentoleranz in 2,4-D-, Glyphosat- und Glufosinat-toleranten Sojabohnen, Mais oder Baumwolle, umfassend das In-Kontakt-Bringen der unerwünschten Vegetation und der 2,4-D-, Glyphosat- und Glufosinat-toleranten Sojabohnen, Mais oder Baumwolle oder des Ortes derselben oder des Blattwerks oder Bodens mit einer Zusammensetzung umfassend eine Mischung umfassend eine synergistische, herbizid wirksame Menge von:

   (a) dem Cholinsalz von 2,4-Dichlorphenoxyessigsäure (2,4-D-Cholin)

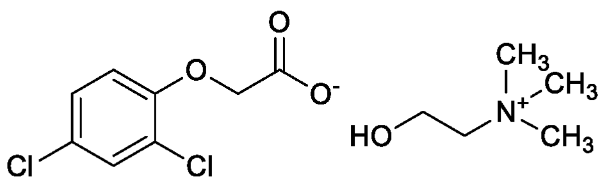

   (b) einem Salz von *N*-(Phosphonomethyl)glycin (Glyphosat)

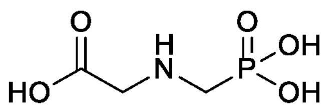

;

und

(c) dem Ammoniumsalz von 2-Amino-4-(hydroxymethylphosphinyl)buttersäure (Glufosinat-Ammonium)

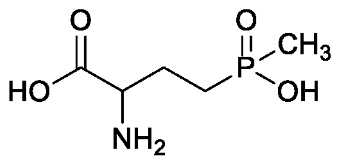

.

2. Das Verfahren gemäß Anspruch 1, wobei das 2,4-D-Cholin, das Salz von Glyphosat und das Glufosinat-Ammonium im Vorauflauf oder Nachauflauf auf die unerwünschte Vegetation oder den Ort derselben oder Blattwerk oder Boden in den 2,4-D-, Glyphosat- und Glufosinat-toleranten Sojabohnen, Mais oder Baumwolle angewandt wird.

3. Das Verfahren gemäß Anspruch 1, wobei die unerwünschte Vegetation vor dem Pflanzen einer Nutzpflanze in Kontakt gebracht wird.

4. Das Verfahren gemäß Anspruch 1, wobei das Salz von Glyphosat aus der Gruppe bestehend aus Kaliumsalz, Isopropylammonium-(IPA)-Salz, Monoethanolammonium-(MEA)-Salz, Monomethylammonium-(MMA)-Salz und Dimethylammonium-(DMA)-Salz und Kombinationen davon ausgewählt ist und vorzugsweise das Dimethylammonium-(DMA)-Salz ist.

5. Das Verfahren gemäß irgendeinem der Ansprüche 1-4, wobei das Gewichtsverhältnis von (a) + (b) zu (c) von etwa 1,5:1 bis etwa 8:1 beträgt.

6. Das Verfahren gemäß irgendeinem der Ansprüche 1-4, wobei das Gewichtsverhältnis von (a) zu (b) zu (c) von etwa 1-4 an (a) zu etwa 1-4 an (b) zu etwa 1 an (c) oder von etwa 1:1:1 bis etwa 4:4:1 beträgt.

7. Das Verfahren gemäß irgendeinem der Ansprüche 1-6, wobei die 2,4-D-, Glyphosat- und Glufosinat-toleranten Sojabohnen, Mais oder Baumwolle einzelne oder mehrere oder gestapelte Merkmale besitzen, die Toleranz gegenüber einem oder mehreren Herbiziden oder Hemmern einer oder mehrerer Wirkweisen verleihen.

8. Das Verfahren gemäß irgendeinem der Ansprüche 1-7, wobei die Verbesserung der Nutzpflanzentoleranz die Reduktion von Schädigung in den 2,4-D- und Glufosinat-toleranten Sojabohnen, Mais oder Baumwolle umfasst.

9. Das Verfahren gemäß irgendeinem der Ansprüche 1-8, wobei die Synergie gemäß der Colby-Gleichung bestimmt wird.

10. Das Verfahren gemäß irgendeinem der Ansprüche 1-9, wobei die unerwünschte Vegetation ein herbizidresistentes oder -tolerantes Unkraut umfasst.

11. Das Verfahren gemäß Anspruch 10, wobei das resistente oder tolerante Unkraut ein Biotyp mit Resistenz oder Toleranz gegenüber einem oder mehreren Herbiziden oder einer oder mehreren chemischen Klassen oder Hemmern mit einer oder mehreren herbiziden Wirkweisen ist.

12. Das Verfahren nach Anspruch 10 oder Anspruch 11, wobei das resistente oder tolerante Unkraut ein Biotyp ist, der resistent oder tolerant gegenüber Acetolactatsynthase-(ALS)- oder Acetohydroxysäuresynthase-(AHAS)-Hemmern, Photosystem-II-Hemmern, Acetyl-CoA-Carboxylase-(ACCase)-Hemmern, Photosystem-I-Hemmern, 5-Enolpyruvylshikimat-3-phosphat-(EPSP)-Synthase-Hemmern, Hemmern der Mikrotubulianordnung, Lipidsynthese-Hemmern, Protoporphyrinogen-Oxidase-(PPO)-Hemmern, Hemmern der Carotinoid-Biosynthese, Hemmern sehr langkettiger Fettsäuren (VLCFA), Phytoen-Desaturase-(PDS)-Hemmern, Glutamin-Synthetase-Hemmern, 4-Hydroxyphenylpyruvat-Dioxygenase-(HPPD)-Hemmern, Mitose-Hemmern, Hemmern der Cellulosebiosynthese, Herbiziden mit mehreren Wirkweisen, Quinclorac, Arylaminopropionsäuren, Difenzoquat, Endothal oder Organoarsenverbindungen ist.

13. Das Verfahren gemäß irgendeinem der Ansprüche 1-12, des Weiteren umfassend das In-Kontakt-Bringen der unerwünschten Vegetation und der 2,4-D-, Glyphosat- und Glufosinat-toleranten Sojabohnen, Mais und Baumwolle oder des Ortes derselben oder von Wasser oder Boden mit einer herbizid wirksamen Menge eines zusätzlichen

Herbizids und/oder das In-Kontakt-Bringen der unerwünschten Vegetation und der 2,4-D-, Glyphosat- und Glufosinat-toleranten Sojabohnen, Mais und Baumwolle oder des Ortes derselben mit einem Herbizid-Safener.

## Revendications

1. Procédé de lutte contre des végétaux indésirables et d'amélioration de la tolérance de cultures de soja, maïs ou coton tolérant vis-à-vis des 2,4-D, glyphosate et glufosinate, lequel procédé comporte le fait de mettre les végétaux indésirables et le soja, maïs ou coton tolérant vis-à-vis des 2,4-D, glyphosate et glufosinate ou l'endroit où ils poussent, leur feuillage ou le sol, en contact avec une composition comprenant un mélange qui contient, en quantités à effet herbicide synergique :

   a) du sel de choline et d'acide 2,4-dichlorophénoxyacétique (2,4-D-choline)

   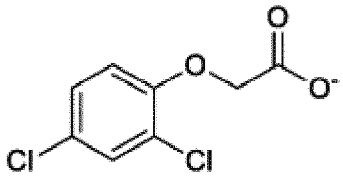 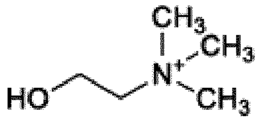

   ,

   b) un sel de N-(phosphonométhyl)glycine (glyphosate)

   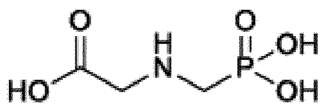

   ,

   c) du sel d'ammonium de l'acide 2-amino-4-(hydroxyméthylphosphinyl)butanoïque (glufosinate d'ammonium)

   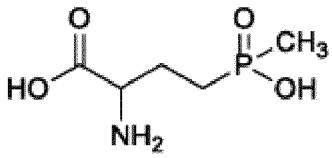

   .

2. Procédé conforme à la revendication 1, dans lequel le 2,4-D-choline, le sel de glyphosate et le glufosinate d'ammonium sont appliqués avant levée ou après levée sur les végétaux indésirables ou l'endroit où ils poussent, leur feuillage ou le sol, dans des cultures de soja, maïs ou coton tolérant vis-à-vis des 2,4-D, glyphosate et glufosinate.

3. Procédé conforme à la revendication 1, dans lequel on met les végétaux indésirables en contact avant de planter une culture.

4. Procédé conforme à la revendication 1, dans lequel le sel de glyphosate est choisi dans l'ensemble formé par le sel de potassium, le sel d'isopropyl-ammonium (IPA), le sel de monoéthanol-ammonium (MEA), le sel de monométhyl-ammonium (MMA) et le sel de diméthyl-ammonium (DMA), ainsi que leurs combinaisons, et est de préférence du sel de diméthyl-ammonium (DMA).

5. Procédé conforme à l'une des revendications 1 à 4, dans lequel le rapport en poids de (a)+(b) à (c) vaut d'environ 1,5/1 à environ 8/1.

6. Procédé conforme à l'une des revendications 1 à 4, dans lequel les rapports en poids de (a) à (b) à (c) valent environ de 1 à 4 de (a) pour environ de 1 à 4 de (b) pour environ 1 de (c), ou d'environ 1/1/1 à environ 4/4/1.

7. Procédé conforme à l'une des revendications 1 à 6, dans lequel le soja, maïs ou coton tolérant vis-à-vis des 2,4-D, glyphosate et glufosinate possède un caractère ou plusieurs caractères ou un groupement de caractères qui le

rend(ent) tolérant vis-à-vis d'un ou de plusieurs herbicide(s) ou inhibiteur(s) d'un ou de plusieurs mode(s) d'action.

**8.** Procédé conforme à l'une des revendications 1 à 7, dans lequel améliorer la tolérance de la culture comporte le fait de réduire les atteintes portées au soja, maïs ou coton tolérant vis-à-vis des 2,4-D, glyphosate et glufosinate.

**9.** Procédé conforme à l'une des revendications 1 à 8, dans lequel l'effet de synergie est déterminé à l'aide de la relation de Colby.

**10.** Procédé conforme à l'une des revendications 1 à 9, dans lequel les végétaux indésirables comprennent une mauvaise herbe résistante ou tolérante vis-à-vis d'un herbicide.

**11.** Procédé conforme à la revendication 10, dans lequel la mauvaise herbe résistante ou tolérante est un biotype résistant ou tolérant vis-à-vis d'un ou de plusieurs herbicide(s) ou d'une ou de plusieurs classes(s) de composés chimiques, ou d'inhibiteurs d'un ou de plusieurs mode(s) d'action d'herbicide.

**12.** Procédé conforme à la revendication 10 ou 11, dans lequel la mauvaise herbe résistante ou tolérante est un biotype résistant ou tolérant vis-à-vis d'inhibiteurs de l'acéto-lactate synthétase (ALS) ou de l'acéto-hydroxyacide synthétase (AHAS), d'inhibiteurs du photosystème II, d'inhibiteurs de l'acétyl-CoA carboxylase (ACCase), d'inhibiteurs du photosystème I, d'inhibiteurs de la 5-énol-pyruvyl-shikimate-3-phosphate synthétase (EPSP), d'inhibiteurs de l'assemblage des microtubules, d'inhibiteurs de la synthèse de lipides, d'inhibiteurs de la protoporphyrinogène oxydase (PPO), d'inhibiteurs de la biosynthèse de caroténoïdes, d'inhibiteurs des acides gras à très longue chaîne (VLCFA ou AGTLC), d'inhibiteurs de la phytoène désaturase (PDS), d'inhibiteurs de la glutamine synthétase, d'inhibiteurs de la 4-hydroxyphényl-pyruvate dioxygénase (HPPD), d'inhibiteurs de la mitose, d'inhibiteurs de la biosynthèse de cellulose, d'herbicides dotés de plusieurs modes d'action, du quinclorac, des acides arylamino-propioniques, du difenzoquat, de l'endothal ou des organo-arséniés.

**13.** Procédé conforme à l'une des revendications 1 à 12, qui comporte en outre le fait de mettre les végétaux indésirables et le soja, maïs ou coton tolérant vis-à-vis des 2,4-D, glyphosate et glufosinate ou l'endroit où ils poussent, leur feuillage ou le sol, en contact avec une quantité à effet herbicide d'un herbicide supplémentaire, et/ou le fait de mettre les végétaux indésirables et le soja, maïs ou coton tolérant vis-à-vis des 2,4-D, glyphosate et glufosinate ou l'endroit où ils poussent, en contact avec un agent phytoprotecteur vis-à-vis d'un herbicide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61918997
- US 61919025 B
- WO 2012082542 A2
- WO 2012082548 A2
- EP 0585210 A1
- US 8283522 B2
- US 7838733 B2
- US 8278505 B2
- US 6153401 A
- CN 103060279
- US 5627061 A
- US 6566587 B1
- US 7893234 B2
- US 7700842 B2
- US 7405074 B2
- US 5463175 A
- US 20130217577 A1
- US 5587903 A
- US 5561236 A
- WO 2008070845 A


### Non-patent literature cited in the description


- **R. M. MERCHANT et al.** *The Journal of Cotton Science,* 2013, vol. 17, 212-218
- an interaction of two or more factors such that the effect when combined is greater than the predicted effect based on the response of each factor applied separately. Herbicide Handbook. Weed Science Society of America, 2014
- **COLBY, S. R.** Calculation of the synergistic and antagonistic response of herbicide combinations. *Weeds,* 1967, vol. 15, 20-22
- McCutcheon's Detergents and Emulsifiers Annual. MC Publishing Corporation, 1998
- Encyclopedia of Surfactants. Chemical Publishing Company, 1980, vol. I-III
- **COLBY, S. R.** Calculation of the synergistic and antagonistic response of herbicide combinations. *Weeds,* 1967, vol. 15, 20-22